# EUROPÄISCHE PATENTANMELDUNG

(11) **EP 1 204 055 A2**
(43) Veröffentlichungstag der Anmeldung: **08.05.2002**
(21) Anmeldenummer: 01125996.7
(22) Anmeldetag: 31.10.2001
(51) Int. Cl.: G06F 17/60, G09F 19/02, G09F 19/08

(54) **Vorrichtung zur optischen Darstellung eines Börsenparameters**

(30) Priorität: 01.11.2000 DE 10054225; 28.04.2001 DE 20107357 U
(71) Anmelder: Scireworks GmbH, 52428 Jülich (DE)
(72) Erfinder: Derichs, Franz-Anton, 52428 Jülich-Barmen (DE)
(74) Vertreter: Vaessen, Paul Wilhelmus H.M.

(57) **Zusammenfassung**

Die Erfindung betrifft eine Vorrichtung zur Darstellung wenigstens eines Börsenparameters mit einer Basiseinheit, wenigstens zwei sich aus der Basiseinheit erhebenden säülenförmigen, senkrecht verschiebbaren Trägereinheiten, wenigstens einem Mittel zur Einstellung der Höhe der jeweiligen Trägereinheit als Maß für die Größe des Börsenparameters sowie einer Steuerungseinheit zur Steuerung des Mittels zur Einstellung der Höhe.

Auf einer ersten Trägereinheit kann eine Bullenfigur und auf einer zweiten Trägereinheit eine Bärenfigur angeordnet sein. Diese Vorrichtung liefert auf für einen Betrachter einfache Art und Weise eine zeitabhängige Information des aktuellen Börsenparameters.

## Beschreibung

Die Erfindung betrifft eine Vorrichtung zur Darstellung wenigstens eines Börsenparameters.

In der finanziellen Welt wie zum Beispiel an Aktienbörsen oder auch bei Banken werden für die dortigen Aktivitäten eine Reihe von Parametern, wie zum Beispiel die Aktienkurse oder Börsenindices zur Einschätzung der künftigen Marktentwicklungen benötigt. Es handelt sich dabei um sich zeitlich ändernden Größen. Sowohl für Unternehmen als auch für Privatleute spielt die Kenntnis unterschiedlichster Börsenparameter eine zunehmend bedeutsamere Rolle.

Es ist als Stand der Technik bekannt, zu diesem Zweck Vorrichtungen einzusetzen mit deren Hilfe in Tabellen- oder Diagrammform der zeitliche Verlauf eines solchen Börsenparameters dargestellt wird. Als Beispiel einer solchen Vorrichtung zur optischen Darstellung wenigstens eines Börsenparameters sei eine Projektionstafel in einem Börsengebäude mit Tabellen oder Diagrammen von Börsenwerten genannt. Auf diese Weise werden die Teilnehmer im geschäftlichen Verkehr über die zeitliche Entwicklung eines oder mehreren Börsenparameter informiert.

Es ist Aufgabe der Erfindung eine alternative Vorrichtung zur Darstellung wenigstens eines Börsenparameters zu schaffen, welche auf für einen Betrachter einfache Art und Weise eine zeitabhängige Information liefert.

Des weiteren ist es Aufgabe der Erfindung ein Verfahren zur Darstellung wenigstens eines Börsenparameters bereitzustellen.

Die Aufgabe wird gelöst durch eine Vorrichtung gemäß der Gesamtheit der Merkmale nach Patentanspruch 1 oder 2. Die Aufgabe wird ferner gelöst durch ein Verfahren gemäß der Gesamtheit der Merkmale nach Patentanspruch 17. Weitere zweckmäßige oder vorteilhafte Ausführungsformen finden sich in den auf diese Ansprüche mittelbar oder unmittelbar rückbezogenen Unteransprüchen.

Es wurde im Rahmen der Erfindung gemäß Patentanspruch 1 erkannt, zur Lösung der gestellten Aufgabe eine Basiseinheit, eine sich aus der Basiseinheit erhebende säülenförmige, senkrecht verschiebbare Trägereinheit, ein Mittel zur Einstellung der Höhe dieser Trägereinheit als Maß für die Größe des Börsenparameters, sowie eine Steuerungseinheit zur Steuerung des Mittels zur Einstellung der Höhe vorzusehen.

Es wurde erkannt, eine Trägereinheit vorzusehen, die in der Höhe einstellbar ist. Auf einer solchen Trägereinheit kann eine zwei- oder dreidimensionale Figur als Representant eines bestimmten Börsenparameters positioniert sein.

Es wurde im Rahmen der Erfindung gemäß Patentanspruch 2 erkannt, zur Lösung der gestellten Aufgabe eine Basiseinheit, wenigstens zwei sich aus der Basiseinheit erhebende säülenförmige, senkrecht verschiebbare Trägereinheiten, wenigstens ein Mittel zur Einstellung der Höhe der jeweiligen Trägereinheit als Maß für die Größe des Börsenparameters, sowie eine Steuerungseinheit zur Steuerung des Mittels zur Einstellung der Höhe vorzusehen.

Es wurde erkannt, mehrere Trägereinheiten vorzusehen, die in der Höhe einstellbar sind. Auf einer solchen Trägereinheit kann eine zwei- oder dreidimensionale Figur als Representant eines bestimmten Börsenparameters positioniert werden. Beispielsweise ist es vorstellbar, auf einer ersten Säule die Marke eines ersten an der Börse notierten Aktie und auf der zweiten Säule eine zweite Marke anzuordnen. Mit Hilfe der Steuerungseinheit kann sodann der aktuelle Wert der jeweilige Aktie optisch visualisiert werden durch Einstellen einer mit dem Wert der Aktie korrelierten Höhe. Mit Hilfe dieser Anordnung mehrerer in der Höhe verschiebbarer Säulen erhält ein Betrachter optisch eine Information über das relative Verhältnis der beiden dargestellten aktuellen Werte. Beispielsweise können auf diese für den Betrachter ansprechende Weise Kurs- oder Indexschwankungen während eines Börsentags visualisiert werden.

Die Aufgabe wird gemäß Patentanspruch 3 bis 4 dadurch gelöst, daß die Vorrichtung eine auf einer Trägereinheit angeordnete Bullenfigur (zum Beispiel als Representant für steigende Kurse) bzw. eine auf einer zweiten / weiteren Trägereinheit angeordnete Bärenfigur (zum Beispiel als Representant für fallende Kurse) aufweist. Die relative Position der beiden Figuren zueinander vermittelt dem Betrachter ein optisches Maß für den Börsenparameter, insbesondere den aktuellen Wert des Börsenindexes zum Schlußkurs des vorangegangenen Börsentags.

In einer vorteilhaften Ausführungsform der Erfindung weist die erfindungsgemäße Vorrichtung gemäß Patentanspruch 5 wenigstens ein Paar Basiseinheiten mit jeweils einer einzigen Trägereinheit auf, wobei die Basiseinheiten mit einem Verbindungsmittel mit einander verbunden sind. Damit kann die relative Position mehrerer Trägereinheiten auf jeweils separaten Basiseinheiten zueinander einstellbar ausgebildet sein, entweder festvorgegeben oder auch variabel einstellbar über das Verbindungmittel. Dabei kann vorteilhafterweise gemäß Patentanspruch 6 vorgesehen sein, daß dieses Verbindungsmittel einen Informationsträger, insbesondere einen Flachbildschirm aufweist. Dieser Informationsträger ermöglicht die Darstellung weiterer Informationen, insbesondere eine optische Darstellung.

In einer Ausführungsform der Erfindung weist die Vorrichtung gemäß Patentanspruch 7 einen Hubzylinder und eine Halterung als Mittel zur Einstellung der Höhe auf. Dabei kann gemäß Patentanspruch 8 ein Hubmotor zum Einsatz kommen. Auf diese Weise erfolgt eine Einstellung der zum Wert des Parameters korrelierten Höhe elektrisch und automatisch.

Wenn auch die Steuereinheit getrennt von der Basiseinheit angeordnet sein kann, ist in einer dazu alternativen Ausführungsform der Erfindung gemäß Patentanspruch 9 die Steuerungseinheit zur Steuerung des Mittels zur Einstellung der Höhe im Inneren der Basiseinheit bzw. im Inneren einer der Basiseinheiten angeordnet. Damit wird eine relative kompakte Bauweise erzielt.

Außerdem kann die erfindungsgemäße Vorrichtung von einem Chip gesteuert werden. Gemäß Patentanspruch 10 weist jedoch eine weitere Variante der erfindungsgemäßen Vorrichtung als Steuerungseinheit zur Steuerung des Mittels zur Einstellung der Höhe eine Datenverarbeitungsanlage auf. Es ist dabei vorstellbar, daß dieser Datenverarbeitungsanlage manuell die aktuellen Werte des optisch darzustellenden Börsenparameters zugeführt werden.

Allerdings ist die erfindungsgemäße Vorrichtung in vorteilhafter Weise gemäß Patentanspruch 11 so ausgebildet, daß sie mit einer den Wert des Börsenparameters enthaltenden, externen Datenbankeinheit verbunden ist. Damit kann bei entsprechender Programmierung der Steuerungseinheit dieser Datenbank automatisch der aktuelle Wert des oder der Börsenparameter entnommen und der Steuerungseinheit zugeführt und weiterverarbeitet werden.

Es kann gemäß Patentanspruch 12 sehr vorteilhaft sein, bei einer Ausführungsform der erfindungsgemäßen Vorrichtung als externe Datenbank ein Videotextsystem eines Fernsehensenders oder ein Internetinformationssystem vorzusehen. Diesbezüglich kann hardwaremäßig in der Steuerungseinheit eine Fernsehkarte bzw. ein Modem zur Herstellung der Datenverbindung zur jeweiligen Datenbank zum Einsatz kommen. Auf diese Weise kommen vergleichsweise einfach zu erhaltenden Datenbanken zum Einsatz.

Die säulenförmigen Trägereinheiten können geometrisch in verschiedenen Varianten eingesetzt werden. Es ist vorstellbar, daß eine einzelne oder mehrere säülenförmige, senkrecht verschiebbare Trägereinheiten in waagerechter Orientierung einen kreisförmigen Querschnitt aufweisen. Dabei kann die erfindungsgemäße Vorrichtung in einer vorteilhaften Ausführungsform gemäß Patentanspruch 13 einen waagerechten Querschnitt im Bereich von 30 cm bis 100 cm, insbesondere im Bereich von 55 cm bis 65 cm, insbesondere 60 cm, aufweisen. Allerdings sind auch andere Querschnittsformen wie zum Beispiel eine ovale Form oder eine Vier-, Sechs- oder Achtecksform vorstellbar.

Außerdem kann in Ausbildung der Erfindung gemäß Patentanspruch 14 vorgesehen sein, daß die säulenförmigen Trägereinheiten in senkrechter Orientierung wenigstens im Bereich von 30 cm bis 100 cm, insbesondere im Bereich von 55 cm bis 65 cm, insbesondere 60 cm, verschiebbar sind.

Mit solchen geometrischen Werten wird eine Ausführungsform der Vorrichtung erhalten, die auch an Stellen einsetzbar ist, die von einer Vielzahl von Betrachtern gleichzeitig gut beobachtbar ist. Beispielsweise kann eine solche Vorrichtung optisch gut wahrnehmbar an der Außenseite eines Gebäudes, insbesondere an der Außenseite eines Bankgebäudes, angeordnet sein. Auf diese Weise erhält man in Ausbildung der Erfindung gemäß Patentanspruch 15 ein (Außen-)Börsenbarometer mit optisch günstiger, ansprechender Darstellung. Beim Betreten der Bank können die Kunden optisch den aktuellen Wert eines eingestellten Börsenparameters oder das Verhältnis mehrerer Börsenparameter zueinander wahrnehmen.

Schließlich ist gemäß Patentanspruch 16 eine besonders vorteilhafte Variante der Erfindung dadurch gegeben, daß eine erfindungsgemäße Anordnung mit mehreren erfindungsgemäßen Vorrichtungen gebildet wird, die eine zentrale Steuereinheit aufweist. Diese zentrale Steuereinheit ist mit den jeweiligen Steuereinheiten verbunden. Auf diese Weise kann von einer einzigen zentralen Stelle aus eine Mehrzahl oder eine Vielzahl von Vorrichtungen gleichzeitig gesteuert, überwacht und gegebenenfalls mit Hilfe einer Fernwartungssoftware auf Funktionstauglichkeit geprüft werden. Dementsprechende Mittel zur Durchführung solcher Maßnahmen sind dann in der zentralen Steuereinheit vorgesehen.

Zur Lösung der gestellten Aufgabe ist gemäß Patentanspruch 17 ein Verfahren zur optischen Darstellung wenigstens eines Börsenparameters vorgesehen mit folgenden Schritten:
- mit Hilfe einer Datenverarbeitungsanlage wird der Börsenparameter ermittelt,
- die Größe wird in ein elektrisches Signal umgewandelt,
- mit Hilfe dieses elektrischen Signals wird eine den Wert des Börsenparameters representierende Höhe einer oder mehrerer sich aus einer Basiseinheit erhebenden säülenförmigen, senkrecht verschiebbaren Trägereinheit eingestellt. Auf dem jeweiligen Träger wird dabei eine zwei- oder dreidimensionale Figur als Representant des darzustellenden Börsenparameters angeordnet.

Zur Durchführung des erfindungsgemäßen Verfahrens kann oder können eine oder mehrere der erfindungsgemäßen Vorrichtungen oder Anordnungen zum Einsatz kommen.

Die Erfindung ist im weiteren an Hand von Figuren und einem Ausführungsbeispiel näher erläutert. Es zeigt:
- Fig. 1:: seitliche Darstellung einer erfindungsgemäßen Vorrichtung mit Bullen- und Bärenfigur;
- Fig. 2:: Flußdiagramm für den Ablauf einer Steuerung der erfindungsgemäßen Vorrichtung.

### Ausführungsbeispiel

Als Beispiel einer erfindungsgemäßen Vorrichtung ist in den nachfolgenden Figuren ein Außenbörsenbarometer erläutert, wie es zum Beispiel an der Außenwand eines Gebäudes, insbesondere einer Bank, angeordnet werden kann.

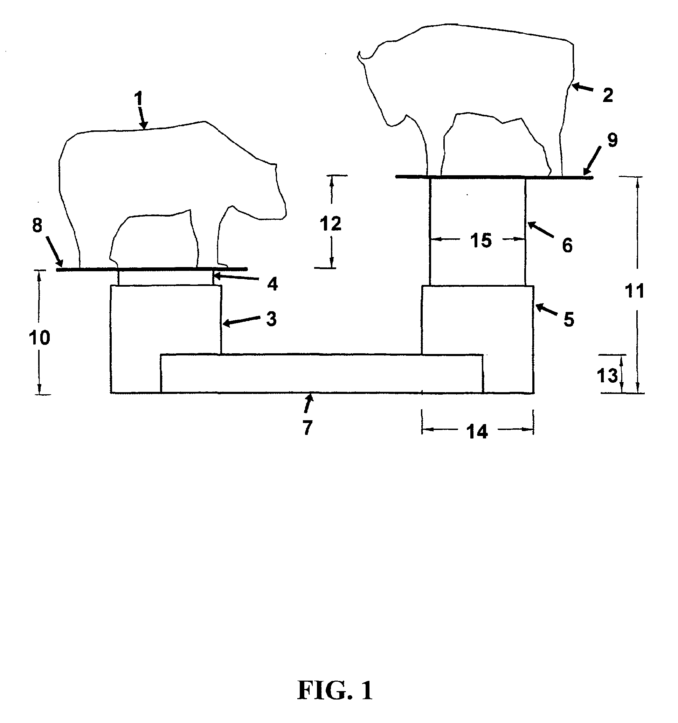

Im einzelnen zeigt Figur 1 im Querschnitt eine dreidimensionale Bärenfigur 1 sowie eine Bullenfigur 2, jeweils auf einer Plattform 8 bzw. 9. Diese jeweilige Plattform 8 bzw. 9 ist mit dem oberen Ende einer senkrecht verschiebbaren Trägereinheit 4 bzw. 6 verbunden. Diese Trägereinheiten 4 und 6 sind passend gelagert in der Basiseinheit 3, 5 und 7. Diese Basiseinheit umfaßt im einzelnen zwei zur Aufnahme der beweglichen Trägereinheiten 4 bzw. 6 vorgesehene, hohlzylinderförmige Halterungen 3 und 5, die durch eine Verbindungseinheit 7 miteinander verbunden sind.

Nicht dargestellt in der Figur 1 sind die im Inneren der Basiseinheit 3, 5 und 7 enthaltenen Hubmotoren zum Einstellen einer vorgegebenen Höhe, sowie die Steuerungseinheit zur elektrischen Steuerung der Motoren. Diese Steuerungseinheit kann in der Basiseinheit 3, 5, und 7 enthalten sein. Es ist aber auch vorstellbar, daß die Steuerungseinheit in Entfernung von der Basiseinheit 3, 5 und 7 angeordnet und über elektrische Zuleitungen mit dieser verbunden ist.

Das in der Figur 1 dargestellte Börsenbarometer hat verschiebbare Trägereinheiten 4 und 6 mit kreisförmigem Querschnitt. Der Wert des in der Trägereinheit 6 angegebenen Außenquerschnitts 15 liegt im Bereich von 55 cm bis 65 cm, insbesondere ist dieser Wert 60 cm. Die senkrecht verschiebbaren Trägereinheiten 4 bzw. 6 erreichen in der Figur 1 eine Höhe 10 bzw. 11 des jeweiligen Plattforms 8 bzw. 9 relativ zur Grundfläche des Verbindungselements 7.

Soweit die eingestellten Werte für die Bullen- und Bärenfigur 2 bzw. 1 den aktuellen Börsenindexwert im Vergleich zum Schlußkurs des vorangegangenen Börsentags darstellen, ist der Differenzwert 12 der Werte 10 und 11 ein optisch dargestelltes Maß für die Aussage ob der aktuelle Wert des Börsenindex höher (bei positivem Wert 12 und relativ zur Bärenfigur 1 höher angeordneter Bullenfigur 2) oder niedriger (bei negativem Wert 12 und relativ zur Bärenfigur 1 niedriger angeordneter Bullenfigur 2) zum Vortagswert ist.

Einer nicht in der Figur 1 dargestellten, in oder nahe der Basiseinheit 3, 5 und 7 angeordneten Datenverarbeitungsanlage wurde mit Hilfe eines Datenverarbeitungsprogramms aus einer externen Datenbank der jeweils aktuelle Wert des Börsenparameters entnommen. In diesem Falle wurde als eine solche Datenbank ein mit einem Fernsehensender ausgestrahltes Videotextsystem gewählt, das mit Hilfe einer Fernsehenkarte in der Datenverarbeitungsanlage ansteuerbar ist. Als Börsenparameter wurde ein nationaler Börsenindex gewählt. Andere Börsenindices oder auch Aktienwerte sind im Rahmen der Erfindung ebenfalls vorstellbar.

Mit Hilfe des Datenverarbeitungsprogramms wurde der aktuell ermittelte Wert des Börsenindexes derart weiterverarbeitet, daß über eine Digital/Analog-Wandlerkarte eine auf diesen Wert abgestimmte Steuerspannung an jeweils einen Hubmotor zur Einstellung der Höhe der jeweiligen Trägereinheit weitergeleitet wurde. Außerdem war in der Datenverarbeitungsanlage ein Programm zur Diagnose und Wartung von eventuellen in der Vorrichtung auftretbaren Problemen installiert.

Ein wie in der Figur 1 beschriebenes Börsenbarometer kann an verschiedenen Stellen aufgebaut sein. Es ist vorstellbar, eine Anordnung mehrerer solcher Börsenbarometer an geografisch verschiedenen Stelle zu bilden.

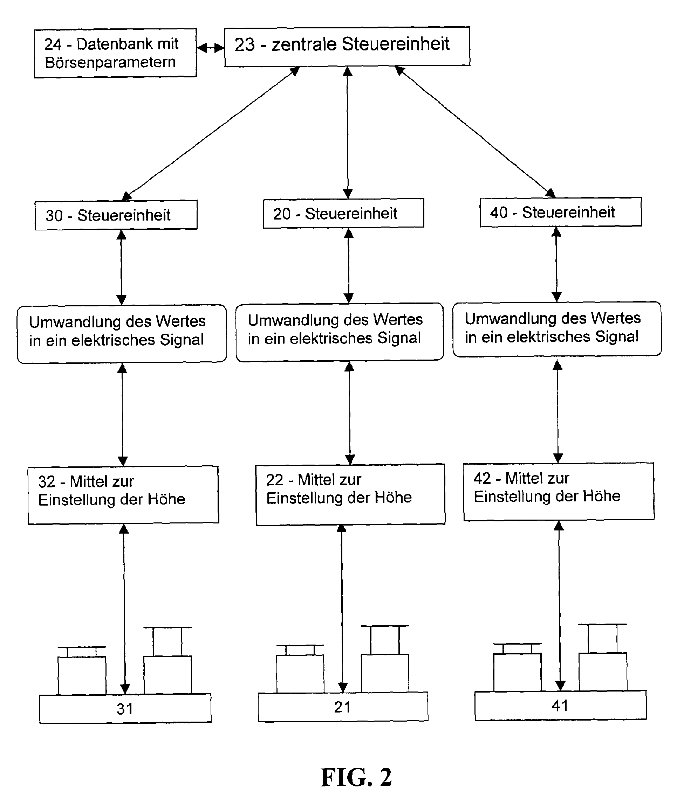

In der Figur 2 ist das Flußdiagramm einer beispielhaften Steuerung für eine solche erfindungsgemäße Anordnung mit drei erfindungsgemäßen Börsenbarometern dargestellt.
Dabei ist an einer ersten Stelle in der Anordnung eine Datenverarbeitungsanlage 23 vorgesehen sein, der mit den jeweiligen Steuereinheiten 20, 30, 40 und den Mitteln 22, 32, 42 zur Einstellung der Höhe der einzelnen, an unterschiedlichen Stellen angeordneten Vorrichtungen 21, 31, 41 verbunden ist. Damit kann die Steuerung der gesamten Anordnung, einschließlich eine Fernwartung, und insbesondere auch die Beschaffung der aktuellen Werte des oder der Börsenparameter aus einer externen Datenbank 24 von der zentralen Steuereinheit 23 aus erfolgen.

In einer zu der in Figur 1 dargestellten, alternativen Ausführungsform der erfindungsgemäßen Vorrichtung kann diese Vorrichtung derart abgewandelt sein, daß nicht eine einzige Basiseinheit nicht zwei Trägereinheiten sondern zwei Basiseinheiten jeweils lediglich eine einzige Trägereinheit aufweisen. Diese beiden Basiseinheiten können mit Hilfe eines Verbindungsmittel miteinander trennbar oder untrennbar in Abstand verbunden sein. Auf diese Weise kann die relative Anordnung der beiden Trägereinheiten zueinander einstellbar gewählt werden. Es ist dabei vorstellbar, daß das Verbindungsmittel zum Beispiel einen Flachbildschirm aufweist zur Darstellung weiterer für den Betrachter nützlichen oder angenehmen Informationen, wie zum Beispiel Kurven der zeitlichen Verläufe eines oder mehrerer Börsenwerte oder auch optisch ansprechende künstlerische oder werbemäßige Angaben oder Inhalte.

Im Rahmen der Erfindung ist es vorstellbar, daß die erfindungsgemäße Vorrichtung eine Kombination aus unterschiedlichen Basiseinheiten mit einer einzigen oder auch mehreren Trägereinheiten aufweist, die dabei über Verbindungsmittel miteinander paarweise verbunden sind. Die Informationsträger, insbesondere Flachbilschirme, können über eine gemeinsame Steuereinheit oder mehrere separat ansteuerbaren Steuereinheiten angesteuert werden.

Verfahrensmäßig kann mit Hilfe der erfindungsgemäßen Vorrichtung oder Anordnung zeitaktuell eine Angabe eines oder mehrerer Börsenparameter im Laufe beispielsweise eines Börsentags erfolgen.

Es kann dabei vorteilhaft sein, im zeitlichen Verlauf der aktuellen Angabe des Wertes des Börsenparameters in festgelegten Zeitabständen, insbesondere stündlich oder halbstündlich, die Trägereinheit oder die Trägereinheiten programmgesteuert in eine Default-Position, insbesondere in eine Null-Position zu fahren. Mit der Null-Position ist bei mehreren Trägereinheiten die Position gemeint bei der diese Trägereinheiten und damit zum Beispiel Bulle und Bär auf gleicher Höhe stehen. Eine andere Position kann der Schlußwert am Ende des vorangegangenen Börsentags sein. Es hat sich gezeigt, daß bei dieser programmgesteuerten Verfahrensweise mit einem Anzeigeintervall von zum Beispiel einer Stunde ein Anzeigerhytmus erzeugt wird, sodaß aufgrund der häufigen Bewegungen der Trägereinheiten eine erhöhte Aufmerksamkeit des Betrachters, insbesondere des Kunden bewirkt wird.

Nachdem kurzzeitig die optische Angabe des Börsenwertes in der Default-Position gehalten wird, wird die Angabe erneut programmgesteuert optisch dargestellt durch anheben oder absenken der jeweiligen Trägersäule in die den aktuellen Wert darstellende Position. Es ist vorteilhaft, mit Hilfe der Programmsteuerung in der erfindungsgemäßen Vorrichtung die Werte für das Zeitintervall aufeinanderfolgender Default-Positionen, sowie für die Haltezeit in der Default-Position entsprechend zu wählen und einzustellen.

### Bezugszeichenliste

- Bärenfigur: 1
- Bullenfigur: 2
- Halterung der Basiseinheit: 3, 5
- verschiebbare Trägereinheit: 4, 6
- Verbindungseinheit der Basiseinheit: 7
- Plattform für Bärenfigur: 8
- Plattform für Bullenfigur: 9
- Höhe der Plattform für Bärenfigur: 10
- Höhe der Plattform für Bullenfigur: 11
- Differenzwert: 12
- Höhe des Verbindungselements: 13
- (Innen-)Querschnitt Halterung: 14
- (Außen-)Querschnitt Trägereinheit: 15
- (lokale) Steuerungseinheit: 20, 30, 40
- Basis- und Trägereinheit: 21, 31, 41
- Mittel zum Einstellen der Höhe: 22, 32, 42
- Zentrale Steuerungseinheit: 23
- externe Datenbank: 24

## Patentansprüche

1. Vorrichtung zur Darstellung wenigstens eines Börsenparameters mit
- einer Basiseinheit (3, 5, 7),
- einer sich aus dieser Basiseinheit erhebenden säulenförmigen, senkrecht verschiebbaren Trägereinheit (4 oder 6),
- wenigstens einem Mittel (22, 32, 42) zur Einstellung der Höhe dieser Trägereinheit als Maß für die Größe des Börsenparameters,
- einer Steuerungseinheit (20, 30, 40) zur Steuerung des Mittels zur Einstellung der Höhe.

2. Vorrichtung zur Darstellung wenigstens eines Börsenparameters mit
- einer Basiseinheit (3, 5, 7),
- wenigstens zwei sich aus der Basiseinheit erhebenden säulenförmigen, senkrecht verschiebbaren Trägereinheiten (4, 6),
- wenigstens einem Mittel (22, 32, 42) zur Einstellung der Höhe der jeweiligen Trägereinheit als Maß für die Größe des Börsenparameters,
- einer Steuerungseinheit (20, 30, 40) zur Steuerung des Mittels zur Einstellung der Höhe.

3. Vorrichtung nach einem der vorhergehenden Ansprüche mit auf einer Trägereinheit (4) angeordneter Bullenfigur (1).

4. Vorrichtung nach einem der vorhergehenden Ansprüche mit auf einer weiteren Trägereinheit (6) angeordneter Bärenfigur (2).

5. Vorrichtung nach einem der vorhergehenden Ansprüche mit wenigstens ein Paar Basiseinheiten mit jeweils einer einzigen Trägereinheit, wobei die Basiseinheiten mit einem Verbindungsmittel mit einander verbunden sind.

6. Vorrichtung nach vorhergehendem Patentanspruch mit einem einen Informationsträger, insbesondere einen Flachbildschirm aufweisenden Verbindungsmittel zur Darstellung weiterer Informationen.

7. Vorrichtung nach einem der vorhergehenden Ansprüche, **gekennzeichnet durch** einen Hubzylinder und eine Halterung als Mittel (22, 32, 42) zur Einstellung der Höhe.

8. Vorrichtung nach einem der vorhergehenden Ansprüche, **dadurch gekennzeichnet, daß** das Mittel (22, 32, 42) zur Einstellung der Höhe einen Hubmotor aufweist.

9. Vorrichtung nach einem der vorhergehenden Ansprüche, **dadurch gekennzeichnet, daß** die Steuerungseinheit (20, 30, 40) zur Steuerung des Mittels (22, 32, 42) zur Einstellung der Höhe im Inneren der Basiseinheit (3, 5, 7) bzw. im Inneren einer der Basiseinheiten angeordnet ist.

10. Vorrichtung nach einem der vorhergehenden Ansprüche, **dadurch gekennzeichnet, daß** als Steuerungseinheit (20, 30, 40)zur Steuerung des Mittels (22, 32, 42) zur Einstellung der Höhe eine Datenverarbeitungsanlage (20, 30, 40) vorgesehen ist.

11. Vorrichtung nach einem der vorhergehenden Ansprüche, **dadurch gekennzeichnet, daß** als Steuerungseinheit (22, 32, 42) zur Steuerung des Mittels zur Einstellung der Höhe eine Datenverarbeitungsanlage (20, 30, 40) vorgesehen ist, die mit einer den Wert des Börsenparameters enthaltenden, externen Datenbankeinheit (24) verbunden ist.

12. Vorrichtung nach vorhergehendem Patentanspruch, **dadurch gekennzeichnet, daß** als externe Datenbank (24) ein Videotextsystem eines Fernsehensenders oder ein Internetinformationssystem vorgesehen ist.

13. Vorrichtung nach einem der vorhergehenden Ansprüche, **dadurch gekennzeichnet, daß** eine einzelne oder mehrere säulenförmige Trägereinheiten (4, 6) einen waagerechten Querschnitt (15) im Bereich von 30 cm bis 100 cm, insbesondere im Bereich von 55 cm bis 65 cm, insbesondere 60 cm, aufweisen.

14. Vorrichtung nach einem der vorhergehenden Ansprüche, **dadurch gekennzeichnet, daß** die säulenförmigen Trägereinheiten (4, 6) in senkrechter Orientierung wenigstens im Bereich von 30 cm bis 100 cm, insbesondere im Bereich von 55 cm bis 65 cm, insbesondere 60 cm, verschiebbar sind.

15. Vorrichtung nach einem der vorhergehenden Ansprüche als (Außen-)börsenbarometer.

16. Anordnung mit mehreren Vorrichtungen nach einem der vorhergehenden Ansprüche mit einer zentralen Steuereinheit (23), die mit den jeweiligen Steuereinheiten (20, 30, 40) verbunden ist.

17. Verfahren zur optischen Darstellung wenigstens eines Börsenparameters mit Hilfe wenigstens einer Vorrichtung oder Anordnung gemäß einem der vorhergehenden Patentansprüche mit folgenden Schritten:
- mit Hilfe einer Datenverarbeitungsanlage (20, 23, 30, 40) wird der Börsenparameter ermittelt,
- die Größe wird in ein elektrisches Signal umgewandelt,
- mit Hilfe dieses elektrischen Signals wird eine den Wert des Börsenparameters representierende Höhe einer oder mehrerer sich aus einer Basiseinheit (3, 5, 7) erhebenden säülenförmigen, senkrecht verschiebbaren Trägereinheit (4, 6) eingestellt.

18. Verfahren nach Patentanspruch 17, **dadurch gekennzeichnet, daß** im zeitlichen Verlauf der aktuellen Angabe des Wertes des Börsenparanmeters in festgelegten Zeitabständen, insbesondere stündlich oder halbstündlich, die Trägereinheit oder die Trägereinheiten programmgesteuert in eine Default-Position, insbesondere in eine Null-Position gefahren werden.
